# EUROPÄISCHE PATENTANMELDUNG

(11) **EP 2 441 890 A1**
(43) Veröffentlichungstag der Anmeldung: **18.04.2012**
(21) Anmeldenummer: 10187295.0
(22) Anmeldetag: 12.10.2010
(51) Int. Cl.: E02B 8/08

(54) **Mäander-Bootsfischpass**

(71) Anmelder: Peters, Hans-Wilhelm, 33014 Bad Driburg (DE)
(72) Erfinder: Peters, Hans-Wilhelm, 33014 Bad Driburg (DE)
(74) Vertreter: Hanewinkel, Lorenz

(57) **Zusammenfassung**

Die Erfindung beschreibt einen Bootsfischpass zur Überwindung einer Stauhöhe bestehend aus aneinandergereihten Kammern, die auf einer durchgehenden Trogsohle aus seitlichen Kammerwänden und wechselseitig angeordneten Querwänden gebildet sind und die Querwände miteinander jeweils einen Zuflussschlitz und einen Abflussschlitz als vertikale Schlitzpforte bilden, durch den das Wasser von einem oberseitigen Wasserzulauf zu einem unterseitigen Wasserablauf derart abfließt, dass eine mäanderförmige Passage für Wanderfische und Kleinlebewesen gebildet ist.

Dabei weisen die Oberkanten der Querwände jeweils eine Aussparung auf, die über die Länge des Bootsfischpasses einen geraden hydraulischen Korridor bilden, über die das Wasser mit einer gerichteten Strömung abfließt, wodurch eine Abfahrt für Boote und eine Aufstiegshilfe für große Wanderfische gebildet ist. Jede Aussparung der Querwände ist mit einem verschiebbaren Schott verschließbar.

## Beschreibung

Die Erfindung beschreibt einen Bootsfischpass zur Überwindung einer Stauhöhe bestehend aus aneinandergereihten Kammern, die auf einer durchgehenden Trogsohle aus seitlichen Kammerwänden und wechselseitig angeordneten Querwänden gebildet sind und die Querwände miteinander jeweils einen Zuflussschlitz und einen Abflussschlitz als vertikale Schlitzpforte bilden, durch den das Wasser von einem oberseitigen Wasserzulauf zu einem unterseitigen Wasserablauf derart abfließt, dass eine mäanderförmige Passage für Wanderfische und Kleinlebewesen gebildet ist.

Querverbauungen in Gewässern, wie Wehre, Staumauern oder Sohlabstürze, sind aufgrund der zu überwindenden großen Höhenunterschiede für die meisten Fließgewässerorganismen nicht passierbar. Darüber hinaus wirkt sich der Wasserstau oberhalb des Querbauwerkes ungünstig auf das Gewässerökosystem aus. Der Staubereich ist durch ungünstige Ablagerungen von Schlick und Schlamm sowie höhere Temperaturen und geringere Sauerstoffkonzentrationen gekennzeichnet. Diese veränderten Bedingungen bieten den typischen Fließgewässerarten keinen passenden Lebensraum mehr, insbesondere die Fließgewässerorganismen der Gewässersohle sterben ab. Mit Fischaufstiegsanlagen, insbesondere Fischpässe, Fischtreppen und Fischwanderhilfen, kann die Durchgängigkeit bzw. Durchwanderbarkeit für Wanderfische und Kleinlebewesen wieder hergestellt werden.

Derartige Fischaufstiegsanlagen sind aus den Patentschriften DE 20 2005 019 792 U1, DE 295 07 613 U1 und GB 2 299 920 A bekannt, wobei durch verschiedenartige Lamellenstrukturen, die mit Längs- und Querabständen versetzt sind, ausreichend große Aufenthaltsräume und Wanderkorridore für Fische und Benthosorganismen gebildet werden. Allerdings verhindern die dort beschriebenen Anordnungen eine Bootsabfahrt, sind also für den Menschen unpassierbar. Durch die offenbarten Lamellenstrukturen können Boote bzw. Kanus nicht über eine solche Anlage nach unten fahren bzw. abrutschen. Mit großen Mühen und Gefahren muss das Boot, das unter Umständen schwer beladen ist, zum Überwinden von Querbauwerken herausgehoben, auf Land transportiert und wieder in das Wasser eingesetzt werden. Dabei wird das Ufer beim Ein- und Aussetzen der Boote ökologisch ungünstig belastet. Aus diesem Grund werden heute Kombinationsbauwerke geschaffen, die eine separate Bootsgasse neben den Fischpass bereitstellen, so dass sowohl Fische und Benthoorganismen als auch Freizeitsportler mit ihren Booten die Staustufe in verschiedenen Gerinnen überwinden können, wie beispielsweise die Staustufen bei Blankenstein und Hohenstein (http://iwk.iwg.kit.edu/download_PostecBLS.pdf, https://iwk.iwg.kit.edu/download/Postec-_Hohenstein.pdf) an der Ruhr zeigen. Nachteilig ist dabei der hohe Kostenaufwand bei der Errichtung, umfangreiche Pflatzbedarf für beide Gerinne und der höhere Wasserbedarf für beide Gerinne, der dann nicht mehr der wirtschaftlichen Nutzung durch ein Wasserkraftwerk zugeführt werden kann.

In der Versuchsanstalt und Prüfstelle für Umwelttechnik und Wasserbau der Universität Kassel ist als Lösungsmöglichkeit im Rahmen eines Forschungsprojektes der Fisch-Kanu-Pass zur Überwindung von Staustufen für Wanderfische und Kleinlebewesen als auch für Kanus und flach gehende Boote (http://www.unikassel.de/fb14/vpuw/Download/FKP/Stand_dec_Technik_Borstenkonzept0309.pdf) entwickelt worden. Dabei dienen Borstenelemente als Strömungsabsorber, die so miteinander versetzt sind, dass für die Fische Aufenthaltsräume und Wanderkorridore entstehen. Die elastischen Borstenelemente sind auch für Bootsabfahrten nutzbar, wobei durch eine Verkürzung der Borsten in der beabsichtigten Abfahrtslinie eine Führungswirkung für die Boote erzielt wird. Allerdings erzeugen die Borstenelemente eine große Zahl kleiner Wirbel, die zur Desorientierung der Fische und wirbellose Tiere führen, wodurch sich eine geringere Durchwanderung ergeben kann.

Es ist die Aufgabe der Erfindung einen Bootsfischpass zu offenbaren, der die hydraulischen Eigenschaften eines Fischauf- und abstiegs und einer Bootsgasse in einer einzigen Rinne kombiniert und fischphysiologisch vorteilhafte Strömungsverhältnisse besitzt.

Diese Aufgabe wird durch die Merkmale des Anspruchs 1 gelöst.

Ausführungsformen der Erfindung sind in den Unteransprüchen beschrieben.

Die hydraulischen Anforderungen von Fischauf- und -abstiegsanlagen bzw. Fischpass, Fischtreppe oder Fischwanderhilfe einerseits und von Bootsgassen bzw. Bootspassage oder Kanupassage andererseits sind ähnlich. Die Kombination beider Gerinne in einer einzigen Rinne führt besonders vorteilhaft zu Kosten-, Platz- und Wasserersparnis.

Eine vorteilhafte Ausgestaltung des erfinderischen Bootsfischpasses sieht eine Überwindung von Gefällen bis zu etwa 20% vor. Die Anlage funktioniert ähnlich wie eine Treppe, wobei das angestaute Wasser durch das Gerinne des Bootsfischpasses vom oberseitigen Wasserzulauf zum unterseitigen Wasserablauf nach unten geleitet wird, und dabei mehrere aneinandergereihte Kammern durchfließt. Der daraus resultierende Höhenunterschied zwischen den einzelnen Kammern ist für die aufsteigenden und absteigenden Fische und Kleintiere als auch für die Bootsführer mit den Booten einfach zu bewältigen. Die Kammern sind auf der durchgehenden Trogsohle des Bootsfischpasses aus den seitlichen Kammerwänden und wechselseitig angeordneten Querwänden zwischen den Kammerwänden gebildet. Die Querwände sind derart miteinander angeordnet, dass jeweils ein Zuflussschlitz und ein Abflussschlitz als vertikale Schlitzpforten für jede Kammer gebildet sind.

Die Benutzung des erfinderischen Bootsfischpasses durch Boote ist deutlich weniger gefährlich als die anderen Möglichkeiten der Staustufenüberwindung. Dadurch dass das Wasser mit einer gerichteten Strömung im hydraulischen Korridor langsam abfließt und die Boote durch die V-förmigen Aussparungen der Querwände bei der Durchfahrt der Bootsgasse in der Mitte gehalten werden, fahren diese vorteilhaft langsam und kontrolliert ab. So ist es im Gegensatz zu herkömmlichen separaten Bootsgassen möglich, das Boot allein darin abrutschen zu lassen.

Die Führungswirkung für die Boote in der beabsichtigten Abfahrtslinie wird dadurch erzielt, dass die Aussparungen der Querwände V-förmig sind und die beiden Schenkel der Aussparung jeweils um 45° von der Oberkante der Querwand abragen. Daraus resultiert ein längsseitiger hydraulischer Korridor für die Boote, der optimal dem Profil der gängigen Bootsrümpfe angepasst ist. Die mäanderförmige Strömung durch die beidseits des Korridors angeordneten Kammern greift das Boot bzw. den Bootsrumpf gleichmäßig von beiden Seiten an. Dadurch bildet sich in der Querschnittsmitte des Korridors ein ausgeprägter Strömungskern mit gerichteter Strömung, der das Boot bei der Durchfahrt in der Mitte hält. Eine Kollision mit den Querwänden wird dadurch vermieden, dass die niedrigste Stelle der V-förmigen Aussparung bis auf etwa die Hälfte der Höhe der Kammer hinunter reicht. Der hydraulische Korridor auf der Zentralachse des Bootsfischpasses ist so geformt und ausgebildet, dass sowohl entsprechende Boote ins Unterwasser gleiten können, als auch große spurtstarke Wanderfische wie Lachse, Barben, Hechte und andere problemlos im Stromstrich das Oberwasser erreichen können.

Die Aussparung der obersten Querwand ist mit einem verschiebbaren Schott, einem sogenannten Spatenschieber, abgeschlossen, wobei das Schott in Führungsschienen geführt ist, die links und rechts neben der Aussparung angebracht sind. Wenn das Schott bei einer Bootsabfahrt vom Bootsrumpf überfahren wird, wird es nach unten geschoben und verweilt für eine einstellbare Dauer von beispielsweise 5 bis 10 Minuten im unteren Bereich der Führungsschienen, so lange bis das Boot den Bootsfischpass passiert hat und das Unterwasser am Ende des Wasserablaufs erreicht hat. Über einen Hebelmechanismus schiebt dann ein Pneumatikzylinder das Schott wieder nach oben und verschließt die Aussparung der Querwand. Vorteilhaft reicht der Bereich unterhalb der Aussparung aus, um das Schott vollständig darunter zu schieben. Das Öffnen des Schotts reguliert den Zufluss des Wassers in dem hydraulischen Korridor über die Länge des Bootsfischpasses und ermöglicht das Durchfahren von Booten, Kanus und Kajaks. Während der Aufstiegszeiten von großen Wanderfischen, beispielsweise Lachs, Hecht, Stör und anderer großer Fische die zum Auffinden geeigneter Laichplätze stromaufwärts wandern, sind die Schotten für diesen Zeitraum dauerhaft unten festsetzbar. Der Höhenunterschied zwischen den Kammern des Bootsfischpasses ist für diese Fische einfach im Spurt entlang des Korridors zu nehmen. Zudem können aufsteigende Fische in den einzelnen Kammern Ruhephasen einlegen und so Kraft sammeln für den weiteren Aufstieg.

Zu den Aufstiegszeiten der großen Wanderfische sorgt die Anlage mittels einer Sonde für eine Zusatzdotation von beispielsweise 200 1/s. Die Grundversorgung des Mäander-Bootsfischpasses beträgt im Normalbetrieb etwa 120 1/s, was als ökologisch und ökonomisch optimaler Wert ermittelt wurde. Bei großen Flüssen und Strömen oder Talsperren können wesentlich größere Dotationsmengen bereitgestellt werden.

Eine vorteilhafte Ausgestaltung der Erfindung sieht vor, dass mehrere aneinanderliegende Kammern einen Abschnitt des Bootsfischpasses von etwa 6 m Länge bilden. So können die Abschnitte auf einem LKW verladen und vor Ort zu einem längeren Fischpass zusammengefügt werden. Dabei werden die Abschnitte aneinandergereiht und auf einer örtlich hergestellten Betonsohlrampe befestigt. Aneinander angrenzende Abschnitte werden zusammenhängend miteinander verbunden, so dass ein Ausfließen von Wasser verhindert ist. Ein sinnvolles Maß für die Breite des Abschnittes liegt bei ca. 2 m, die Höhe liegt üblicherweise bei etwa 1 m.

Die Abschnitte des Bootsfischpasses sind als ein aufrecht stehender U-förmiger Trog mit rechtwinklig zur Trogsohle stehenden Kammerwänden gebildet. Dabei wird jeder Trog aus glasfaserverstärkten Kunststoffbohlen in handelsüblicher Länge vorgefertigt. Es bietet sich an, mit Recycling-Kunststoff zu verwenden, da er preisgünstig, wasserbeständig und umweltverträglich ist. Das Material besitzt bei Wandstärken von 5 cm die für die auftretenden Strömungskräfte notwendige Festigkeit. In der vorliegenden Ausführung sind die Bohlen mit einem Feder-Nut-System ausgestattet, das es ermöglicht, die einzelnen Bohlen ineinander zu stecken, um hierdurch eine Montage zu vereinfachen und ein Auseinanderrutschen auch ohne eine Verklebung mit einem Untergrund zu vermeiden.

Innerhalb des Troges befinden sich mehrere Querwände, die abwechselnd an den beiden Kammerwänden befestigt sind und zu diesen in einem Winkel von etwa 60° stehen. Die Kammerwände sind derart angeordnet, dass sie gegen den Wasserdurchfluss gerichtet sind. Durch das Sohlgefälle fließt das Wasser also durch eine Abfolge von mäanderförmigen Strömungsschlingen durch die einzelnen Kammern hindurch und verliert dabei vorteilhaft an Strömungsenergie. Jede Querwand ist aus glasfaserverstärkten Kunststoffprofilen gefertigt. Der Winkel zwischen der Querwand und der Kammerwand ist mit einem runden Strömungsfänger aus glasfaserverstärkten Kunststoffschalen ausgekleidet und der teilzylindrische Abschnitt dazwischen ist ausbetoniert. Die Strömungsfänger leiten die Abflussmenge des Wassers verstärkt am Kammerrand und zur Kammermitte kontinuierlich abnehmend von Schlitzpforte zu Schlitzpforte ab. Hierbei wird die Fließgeschwindigkeit vom Sohlgefälle und der Platzierung der Schlitzpforten bestimmt. Beim Durchfließen der Schlitzpforte wird der Fließquerschnitt stark eingeengt und somit Strömungsenergie abgebaut.

Die Schlitzpforten werden am Ende der Querwand mit einer Strömungsstange und Strömungskeil zu einem konisch nach unten verjüngten offenen Querschnitt ausgebildet, der veränderlich ist. Durch diese vorteilhafte Ausgestaltung der Erfindung wird ein mantelförmiges und turbulenzarmes Strömungsprofil geformt und durch den gesamten Bootsfischpass bis ins turbulente Unterwasser am Ende des Wasserablaufs geführt. Dieses Strömungsprofil hat einen maßgeblichen Einfluss auf die Ausbildung der Leitströmung, an der sich die Fische und Kleinlebewesen beim Durchwandern des Bootsfischpasses orientieren. Das Vorherrschen einer kompakten Leitströmung ist für die Funktionsfähigkeit eines Fischpasses entscheidend. Gleichzeitig finden alle wanderwilligen Wasserorganismen ihren nach der individuellen Schwimmleistung ausgebildeten Wanderkorridor. Hierdurch wird die Schlitzpforte den Ansprüchen benthisch orientierter Fische bzw. Grundfische als auch pelagisch orientierter Fische bzw. Freiwasserfische gerecht. Die Schlitzpforte verjüngt sich vom Wasserspiegel zur Sohle hin, wodurch sich die Fließgeschwindigkeit in Sohlnähe reduziert. In der jeweils folgenden Kammer entstehen besonders vorteilhaft keine Fisch irritierenden Turbulenzen bzw. Wirbel oder Auftriebswellen.

Die Strömung wird vertikal-zentrifugal aufgebaut und durch die glatten, runden Wände fischfreundlich geformt. Sie nimmt in ihrer Intensität zum Mittelpunkt des Rundbeckens hin gleichförmig konzentrisch ab. Diese Strömungsführung entspricht in besonderer Weise der Physiologie der Fische in ihrem gesamten Arten- und Größenspektrum. Die höchste Strömungsgeschwindigkeit bildet sich an den Wänden der Kammer, während sich in der Mitte jeder Kammer eine ruhige Zone bildet, die den Fischen zum Ausruhen dienen kann. Die so geformte Strömung, die sich durch den gesamten Bootsfischpass fortsetzt, verhindert auch das Absetzen von biologischen Schwebstoffen. Daher finden im Bootsfischpass keine anaeroben Faulprozesse statt und die Wartung der Anlage wird minimiert.

Die Oberkanten der Querwände und die Oberkanten der Kammerwände sind durch ein Rundprofil gebildet, so dass eine gefahrlose Berührung durch den Bootsführer ohne irgendwelche scharfkantigen Bauteile möglich ist. Vorteilhaft sind die Rundprofile aus einem Kunststoff oder Recycling-Kunststoff gefertigt, das keine Glasfasern und keine mineralischen Füllstoffe enthält, wodurch derartig ausgestatte Materialien an den Booten wie Schleifmittel wirken. Der Bootsrumpf kann so auch bei Niedrigwasser entlang dem hydraulischen Korridor entlang rutschen, ohne dass er verschrammt wird. Zusätzlich wirkt das Recycling-Material bzw. PE seifig, wodurch das Abrutschen unterstützt wird.

Parallel zu dem hydraulischen Korridor ist an den Oberkanten der Querwände ein Handlauf angebracht, wobei eine Riffelung empfehlenswert ist, damit man nicht mit den Händen abrutscht. Sollte die Bootsfahrt ins Stocken kommen, ist mit leichtem Anschieben durch den Bootsführer an den beiden Handläufen ein weiteres Abrutschen möglich. Besonders schwer beladene Boote, die breit sind und viel Tiefgang haben, können vor der Abfahrt geleichtert werden, beispielsweise durch Aussteigen von Personen, so dass eine Benutzung des Bootsfischpasses in der Regel trotzdem möglich ist.

Eine Weiterführung der Erfindung sieht vor, dass zwischen dem Handlauf und der Kammerwand über die Länge des Bootsfisches ein Treidelsteg angebracht ist. Dadurch ist es möglich, das Boot auch entgegen der Fließrichtung des Wassers vom Unterwasser zum Oberwasser zu ziehen. Darüber hinaus schützt der Treidelsteg den Bootsfischpass vor Verunreinigungen durch herabfallende Äste und andere Gegenstände und kann an jeder Stelle des Bootsfischpasses zum Aussteigen aus dem Boot genutzt werden. Empfehlenswert ist es, den Treidelsteg am Wasserzulauf und am Wasserablauf in einen Anlegesteg auslaufen zu lassen.

Eine vorteilhafte Ausgestaltung der Erfindung sieht an der Trogsohle einen Interstitialaufbau als Benthos-Korridor vor. Er besteht aus einer etwa 8 cm hohen Kiesschüttung mit einer durchschnittlichen Korngröße von 20 bis 60 mm, die durch ein PE-Wirrgelege fixiert wird. Wenn es erforderlich ist, kann auf die Trogsohle zuerst ein etwa 4 cm starker Estrichbelag aufgebracht werden. Gehalten wird dieser Bodenaufbau durch eine Vielzahl von halbrunden Rohr-Halbschalen, die mit Schrauben in der Sohle befestigt sind. Dabei sind die Rohr-Halbschalen halbkreisförmig mit einem Abstand quer vor dem Strömungsfänger angeordnet. Nach längerer Betriebszeit lagern sich dünne Sedimentschichten in den Ruhezonen der Kammern ab. Die erfinderische Sohlstruktur bietet dabei Wander-, Lebens- und Schutzräume für Makrozoobenthos und Kleinfische.

In einer vorteilhaften Ausführung des örtlich montierten Bootsfischpasses führt vom Wasserablauf des letzten Abschnittes des Bootsfischpasses eine gerade senkrechte Leitwand von 3 bis 7 m Länge vom Ufer in den Fluss hinein. Dadurch ist das Einschwimmdelta des Bootsfischpasses im Unterwasser so ausgebildet, dass die Lockströmung relativ weit schräg in die Strömung des Flusses hineinreicht und mitgeführte Duftstoffe gezielt verteilt. Diese Strömung unterscheidet sich deutlich von der desorientierenden Strömung einer Turbine.

Am Wasserzulauf im Oberwasser sieht die Erfindung eine Kontrollreuse vor, die zur Funktionskontrolle des Bootsfischpasses für auf und absteigende Fische und Kleinlebewesen zur Zählung und Vermessung bequem und schonend abgegriffen werden können. Der Einstiegskanal zum Bootsfischpass im Oberwasser ist günstiger weise in unmittelbarer Nähe der Querverbauung angeordnet, so dass die einfließende Strömung von abwärts wandernden Fischen gefunden wird. Zur hinderungsfreien Einfahrt von Booten ist der Einstiegskanal in Ufernähe geöffnet. Das ermöglicht eine leichtes Auffinden und eine sichere Einfahrt für die Bootsführer.

Die Erfindung wird anhand von Figuren beispielhaft erläutert.
Fig. 1 zeigt einen Abschnitt des Bootsfischpasses mit Längsgefälle im Längsschnitt
Fig. 2 zeigt einen Abschnitt des Bootsfischpasse in Draufsicht
Fig. 3. zeigt einen Trog mit Boot und Bootsführer im Querschnitt
Fig. 4 zeigt einen Trog mit geschlossenem Schott im Querschnitt
Fig. 5 zeigt einen Trog mit geöffnetem Schott im Querschnitt
Fig. 6 zeigt mehrere Kammern mit hydraulischem Korridor in Draufsicht
Fig. 7 zeigt einen kompletten Bootsfischpass mit Wasser-Zulauf und -Ablauf in Draufsicht

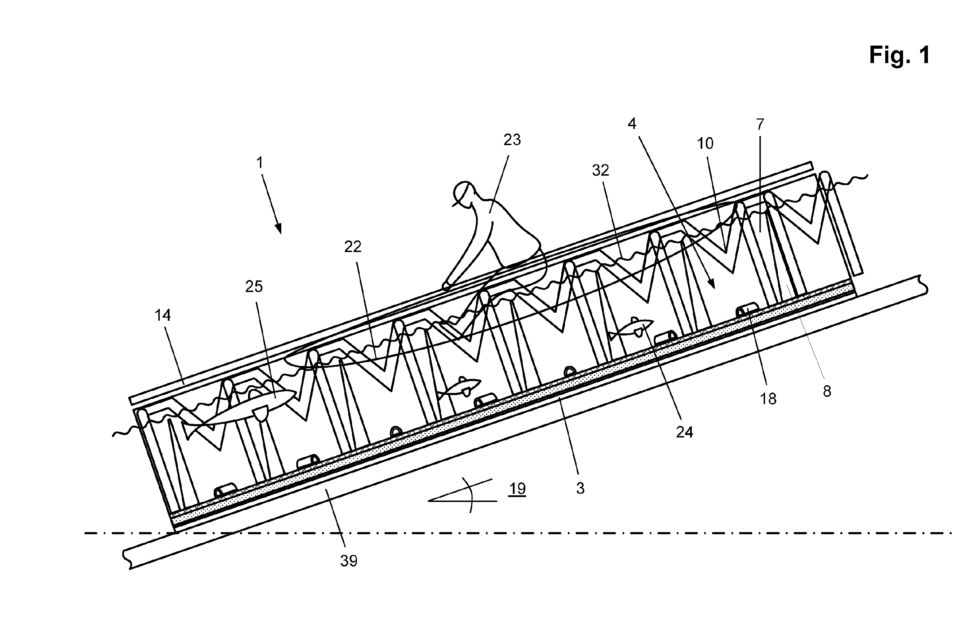

In Fig. 1 ist im Längsschnitt ein Abschnitt 1 des Bootsfischpasses mit Längsgefälle 19 gezeigt. Dabei ist der Abschnitt 1 auf einer örtlich hergestellten Betonsohlrampe 39 befestigt. Der Bootsfischpass besteht aus mehreren Kammern 4, die die Länge des Gefälles vom Zulauf des Wassers 33 bis zum Ablauf des Wassers 34 überbrücken. Mehrere Kammern 4 sind zu einem längeren Abschnitt des Bootsfischpasses zusammengesetzt, der vorgefertigt ist und auf einem LKW vor Ort transportiert werden kann. Der Abschnitt des Bootsfischpasses ist als ein nach oben offener U-förmiger Trog 1 mit senkrecht stehenden Kammerwänden auf einer Trogsohle 3 gefertigt.

Die Kammern 4 sind jeweils durch wechselseitig angeordnete Querwände 5 getrennt, an deren Oberkante eine V-förmige Aussparung 10 ausgebildet ist. Diese Aussparungen 10 bilden über die Länge des Bootsfischpasses einen geraden hydraulischen Korridor, über den das Wasser 32 mit einer gerichteten Strömung abfließt. Auf dem fließenden Wasser 32 schwimmt das Boot 22 mit dem Bootsführer 23 das Gefälle 18 hinunter. Dabei kann sich der Bootsführer 23 an zwei Handläufen 14 festhalten, die beidseits der Aussparung 10 auf den Oberkanten der Querwände 5 verlaufen. Aber auch große Wanderfische 25 wie beispielsweise Lachse, Barben und Hechte können so problemlos im Stromstrich des hydraulischen Korridors das Oberwasser erreichen. Die Querwände 5 sind an ihrer Oberkante mit einem Rundprofil versehen, das Beschädigungen des Bootes 22 vermeiden hilft und auch für die Fische 25, die den hydraulischen Korridor überwinden, keine Verletzungsgefahr bedeutet.

Die Querwände 5 sind derart zueinander angeordnet, dass jeweils ein Zuflussschlitz und ein Abflussschlitz für die Kammer 4 als vertikale Schlitzpforte 7 gebildet sind. Dabei sind am Ende der Querwand 5 ein Strömungskeil 8 und eine Strömungsstange zu einem konisch nach unten verjüngten offenen Querschnitt ausgebildet, wodurch sich die Fließgeschwindigkeit des Wassers in Sohlnähe 3 reduziert. Dieses differenzierte Strömungsprofil über die Hohe der Kammer 4 ermöglicht den verschiedenartigen Wanderfischen 24 und Kleinlebewesen eine mäanderförmige Passage durch den Bootsfischpass.

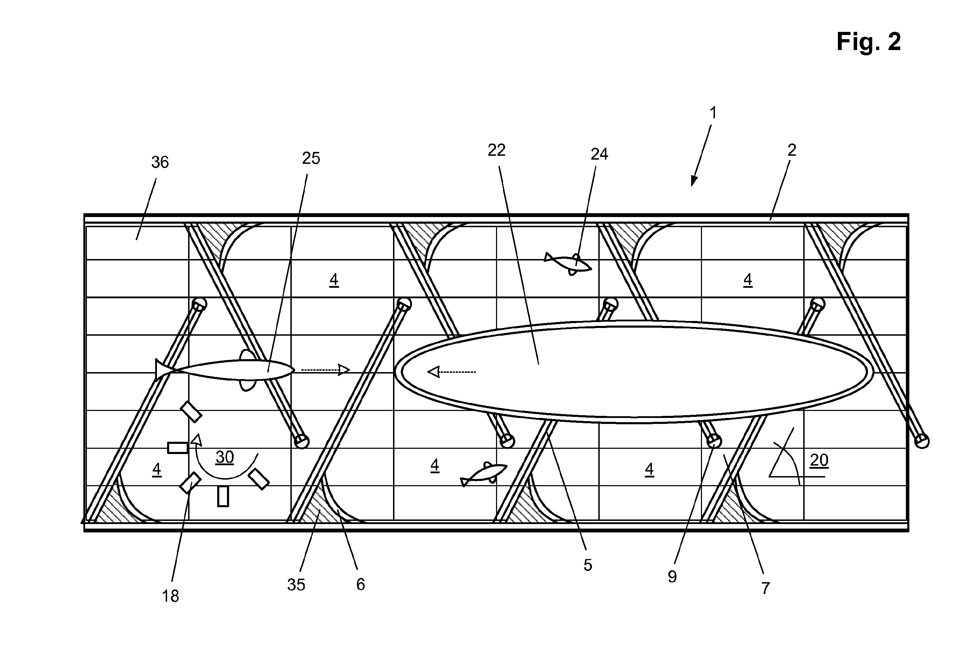

In Fig. 2 ist in Draufsicht ein Abschnitt 1 des Bootfischpasses dargestellt. Jede der aneinandergereihten Kammern 4 ist durch die seitliche Kammerwand 2 und Querwände 5 begrenzt, die auf der Trogsohle 3 des Bootsfischpasses senkrecht angeordnet sind. Die Querwände 5 sind dabei unter einem Winkel 20 von 60° wechselseitig gegen den Wasserdurchfluss gestellt, wobei sie für die Kammern 4 jeweils einen Zuflussschlitz und einen Abflussschlitz als vertikale Schlitzpforte 7 bilden. Der Winkel 20 zwischen der Kammerwand 2 und der Querwand 5 ist mit einem runden Strömungsfänger 6 gefüllt, wobei der dazwischen liegende Abschnitt 35 ausbetoniert ist.

Am Ende der Querwand 5 befindet sich zur Schlitzpforte 7 hin eine Strömungsstange 9, über die ein turbulenzarmes Strömungsprofil geformt ist. Über den ganzen Bootsfischpass hindurch orientieren sich die Fische 24 an dem Strömungsprofil als Leitströmung 30. Für die bodennahen Kleinlebwesen sind am Boden jeder Kammer 4 Rohr-Halbschalen 18 halbkreisförmig mit einem Abstand quer vor dem Strömungsfänger 6 angeordnet. Die Öffnungen der Rohr-Halbschalen 18 sind quer zur zentrifugalen Strömung 30 in Richtung der ruhigen Zone in der Kammer 4 angeordnet, wodurch bodennahe Fische 24 und Kleinlebewesen leichten Einlass finden und diese bevorzugt als Ruhe- und Lebensraum nutzen können.

Der hydraulischen Korridor auf der Zentralachse des Bootsfischpasses ist so ausgebildet, das sowohl Boote 22 mit der Strömung abfahren können, als auch große Wanderfische 25 wie beispielsweise Lachse problemlos aufsteigen können.

Der Abschnitt des Bootsfischpasses ist als ein U-förmiger Trog 1 aus glasfaserverstärkten Kunststoffbohlen 36 gefertigt mit der für die auftretenden Strömungskräfte notwendigen Festigkeit.

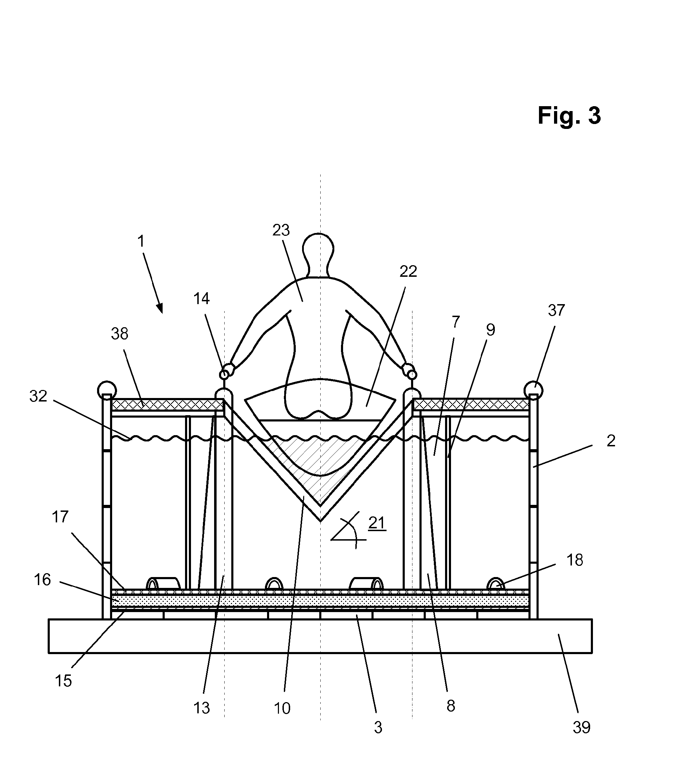

Fig. 3 zeigt einen Querschnitt durch einen Trog 1 des Bootsfischpasses während der Überfahrt eines Boots 22 mit Bootsführer 23. Der Trog 1 weist eine nach oben offene U-Form mit senkrecht auf der Trogsohle 3 stehenden Kammerwänden 2 auf, der auf einer örtlich hergestellten Betonsohlrampe 39 befestigt ist.

In dem Bootsfischpass sind durch Querwände 5 aneinandergereihte Kammern 4 und Schlitzpforte 7 gebildet, durch die das Wasser 32 fließt. Dabei weisen die Oberkanten der Querwände 5 jeweils eine V-förmige Aussparung 10 auf, so dass das Boot 22 in einem hydraulischen Korridor geführt ist. Die beiden Schenkel der Aussparung 10 ragen im Winkel 21 von etwa 45° von der Oberkante ab. Am Ende der Querwand 5 zur Schlitzpforte 7 hin ist eine Strömungsstange befestigt mit. Auf der gegenüberliegenden Seite befindet sich ein Strömungskeil 8. Aus dem veränderlichen Querschnitt der Schlitzpforte 7 resultiert eine Einstellung der Fliessgeschwindigkeit des Wassers 32 für die verschiedenartigen Wanderfische und Kleinlebewesen.

Der Bootsführer 23 kann sich an zwei Handläufen 14 festhalten, die beidseits der Aussparung 10 auf den Oberkanten der Querwände 5 verlaufen. Zwischen dem Handlauf 14 und der Kammerwand 2 ist über die Länge des Bootspasses ein Treidelsteg 38 angebracht, wodurch die Boote 22 auch entgegen der Strömung 33, 34 gezogen werden können.

Der Bodenaufbau des Bootsfischpasses besteht aus einer Kiesschüttung 16 auf einem Estrichschicht 15, die durch ein PE-Wirrgelege 17 festgehalten wird. Darüber hinaus wird der Bodenaufbau durch Rohr-Halbschalen 18 gehalten, die mit der Trogsohle 3 verschraubt sind

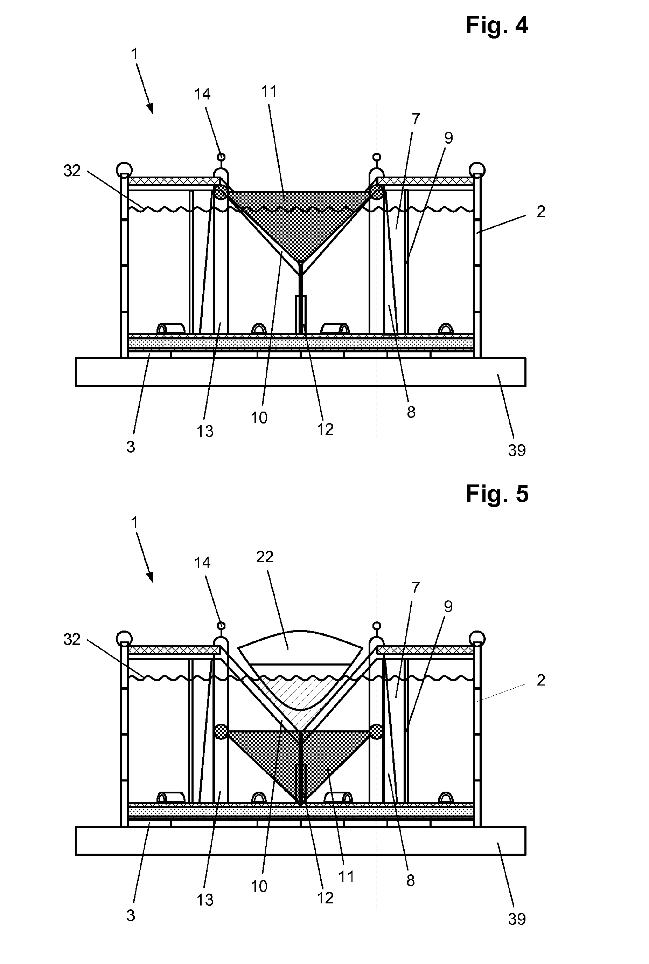

In Fig. 4 ist der Querschnitt durch den Trog 1 wie in Figur 3 beschrieben mit geschlossenen Schott 11 dargestellt. Eine vorteilhafte Ausgestaltung des erfinderischen Bootsfischpasses sieht die Anordnung des Schotts 11 an der ersten Querwand 5 nach dem Wasserzulauf vor. Das Schott 11 wird dabei in den links und rechts der Aussparung 10 an der Querwand 5 befestigten Führungsschienen 13 geführt. Die Aussparung 10 ist durch den Schott 11 geschlossen, wenn es sich im obersten Führungsbereich befindet.

An der unteren Kante ist das Schott 11 mit einem Luftdruckzylinder 12 verbunden, der das Schott 11 nach einer einstellbaren Zeitdauer automatisch nach oben schiebt, beispielsweise nach einer Bootsüberfahrt 22 oder am Ende von Aufstiegszeiten großer Wanderfische 25.

In Fig. 5 ist noch einmal der Querschnitt durch den Trog 1 wie in Figur 3 und 4 beschrieben mit geöffneten Schott 11 dargestellt. Die Aussparung 10 ist geöffnet und beispielsweise durch eine Boot 22 passierbar, wenn sich das Schott im untersten Führungsbereich der Führungsschienen 13 befindet.

Beim Überfahren des Schotts 11 mit dem Bootsrumpf 22 wird es nach unten geschoben und verweilt dort für eine einstellbare Zeitdauer. Über einen Hebelmechanismus schiebt dann der Luftdruckzylinder 12 den Schott 11 wieder nach oben und verschließt die Aussparung 10 der Querwand 5, so dass kein Wasser 32 mehr durch den hydraulischen Korridor fließt.

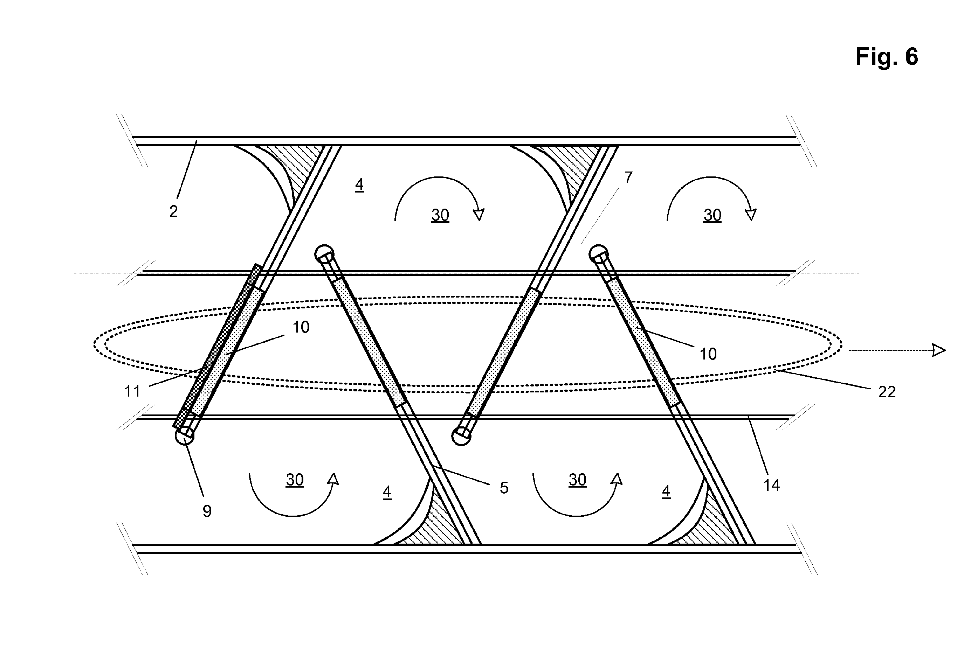

Fig. 6 verdeutlicht in Draufsicht den hydraulischen Korridor über mehrere Kammern 4 des Bootsfischpasses, wie in der vorhergehenden Figur 2 beschrieben. Die Oberkanten der Querwände 5 weisen jeweils eine V-förmige Aussparung 10 auf, die über die Länge des Bootsfischpasses einen hydraulischen Korridor bildet. Dabei befindet sich die auf der linken Seite dargestellte erste Querwand 5 unmittelbar nach dem Wasserzulauf des Bootsfischpasses. Gemäß der erfinderischen Ausgestaltung ist diese erste Querwand 5 mit einem verschiebbaren Schott 11 verschließbar, so dass der Wasserabfluss über den hydraulischen Korridor unterbunden ist

Die Strömung 30 durch die beidseits des Korridors angeordneten Kammern 4 greift das Boot 22 gleichmäßig von beiden Seiten an. Dadurch bildet sich im hydraulischen Korridor eine gerichtete Strömung, die das Boot 22 bei der Durchfahrt in der Mitte hält.

Zur Sicherheit und zum Anschieben des Boots 22 ist beidseitig der Aussparungen 10 ein parallel zu dem hydraulischen Korridor verlaufender Handlauf 14 angebracht.

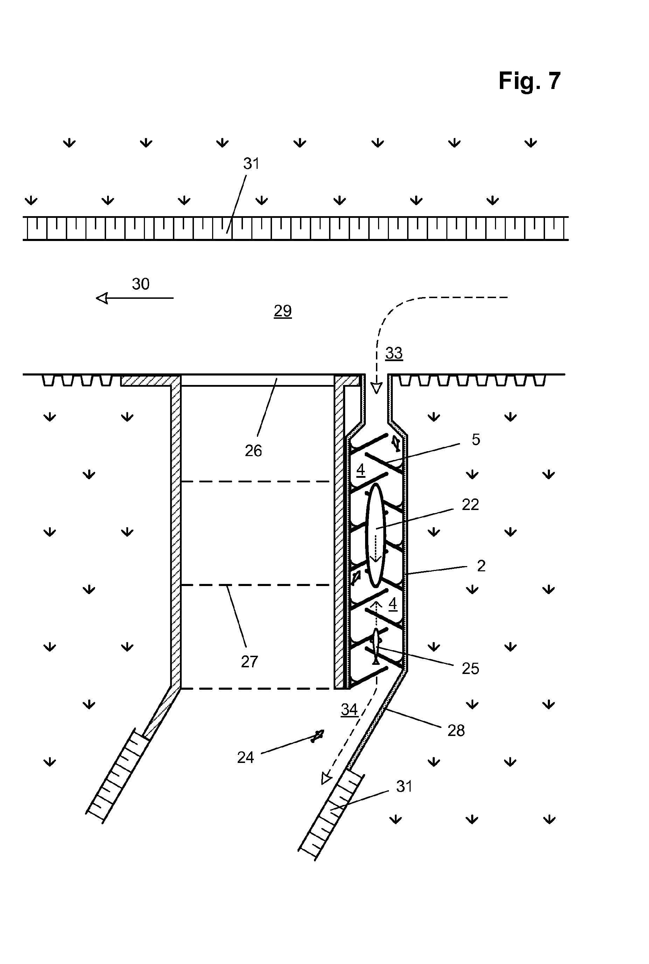

Fig. 7 zeigt eine Übersicht über den Aufbau und die Anordnung eines gesamten Bootsfischpasses an einem Fluss 29. An dem Fluss 29 wird der gewünschte Aufstau des Wassers durch ein Wehrbauwerk mit einem Wehrrücken 26 und drei Wehrschwellen 27 bewirkt. Rechts neben dem Wehrbauwerk ist der Bootsfischpass angeordnet, wobei das Flusswasser über den Wasserzulauf 33 in Bootsfischpass gelangt. Am Wasserablauf 34 tritt das Flusswasser wieder aus dem Bootsfischpass aus und bildet an einer am Ufer 31 positionierten Leitwand 28 eine laminare Lockströmung. Die flussaufwärts wandernden Fische 24, 25 werden von dieser Strömung in den Bootsfischpass geleitet.

Darüber hinaus kann ein Boot 22 über den Wasserzulauf 33 vom Fluss 29 in den Bootsfischpass einfahren. Nach dem Überfahren des Schotts an der ersten Querwand 5 bleibt das Schott für die Zeitdauer der Bootsdurchfahrt 22 geöffnet, so dass das Wasser durch den hydraulischen Korridor des Bootsfischpasses abfließen kann. Dadurch ist die Abfahrt des Bootes 22 entlang der gerichteten Strömung des hydraulischen Korridors möglich und eine Durchgängigkeit für Boote 22 gebildet.

Der Bootsfischpass selbst besteht aus mehreren miteinander verbundenen und im Boden verankerten Abschnitten, die in den vorhergehenden Figuren beschrieben sind. Der Zulauf 34 und die Leitwand 28 sind wie die Kammerwände 2 aus glasfaserverstärkten Kunststoffprofilen aufgebaut und an den Kammerwänden 2 befestigt.

### Bezugszeichen

- 1: Trog
- 2: Kammerwand
- 3: Trogsohle
- 4: Kammer
- 5: Querwand
- 6: Strömungsfänger
- 7: Schlitzpforte
- 8: Strömungskeil
- 9: Strömungsstange
- 10: Aussparung Querwand
- 11: Schott
- 12: Luftdruckzylinder
- 13: Führungsschiene
- 14: Handlauf
- 15: Estrich
- 16: Kies schüttung
- 17: Wirrgelege
- 18: Rohr-Halbschalen
- 19: Längsgefälle Bootsfischpass
- 20: Winkel Querwand
- 21: Winkel Aussparungsschenkel
- 22: Boot, Bootsrumpf
- 23: Bootsführer
- 24: Wanderfisch, Forelle, Asche
- 25: Großer Wanderfisch, Lachs
- 26: Wehrrücken
- 27: Wehrschwelle
- 28: Leitwand
- 29: Fluss
- 30: Strömung
- 31: Ufer
- 32: Wasser
- 33: Wasserzulauf
- 34: Wasserablauf
- 35: Betonabschnitt
- 36: Bohle
- 37: Rundprofil
- 38: Treidelsteg
- 39: Betonsohlrampe

## Patentansprüche

1. Bootsfischpass zur Überwindung einer Stauhöhe bestehend aus aneinandergereihten Kammern (4), die auf einer durchgehenden Trogsohle (3) aus seitlichen Kammerwänden (2) und wechselseitig angeordneten Querwänden (5) gebildet sind und die Querwände miteinander jeweils einen Zuflussschlitz und einen Abflussschlitz als vertikale Schlitzpforte (7) bilden, durch den das Wasser (32) von einem oberseitigen Wasserzulauf (33) zu einem unterseitigen Wasserablauf (34) derart abfließt, dass eine mäanderförmige Passage für Wanderfische (24) und Kleinlebewesen gebildet ist, **dadurch gekennzeichnet,**
**dass** die Oberkanten der Querwände (5) jeweils eine Aussparung (10) aufweisen, die über die Länge des Bootsfischpasses einen geraden hydraulischen Korridor bilden, über die das Wasser (32) mit einer gerichteten Strömung (30) abfließt, wodurch eine Abfahrt für Boote (22) und eine Aufstiegshilfe für große Wanderfische (25) gebildet ist,
und **dass** wenigstens eine Aussparung (10) der Querwände (5) mit einem verschiebbaren Schott (11) verschließbar ist.

2. Bootsfischpass nach Patentanspruch 1, **dadurch gekennzeichnet,**
**dass** das maximale Längsgefälle (19) des Bootsfischpasses etwa 20% beträgt.

3. Bootsfischpass nach Patentanspruch 1, **dadurch gekennzeichnet,**
**dass** die Aussparungen (10) der Querwände (5) V-förmig sind, so dass das Boot (22) in dem hydraulischen Korridor geführt ist.

4. Bootsfischpass nach Patentanspruch 3, **dadurch gekennzeichnet,**
**dass** die niedrigste Stelle der V-förmigen Aussparung (10) bis auf etwa die Hälfte der Höhe der Kammer (4) hinunter reicht.

5. Bootsfischpass nach Patentanspruch 1, **dadurch gekennzeichnet,**
**dass** das Schott (11) beidseitig in Führungsschienen (13) geführt ist, die neben der Aussparung (10) an der Querwand (5) angebracht sind.

6. Bootsfischpass nach Patentanspruch 5, **dadurch gekennzeichnet,**
**dass** der Schott (11) bei einer Bootsfahrt (22) und während Aufstiegszeiten von großen Wanderfischen (25) nach unten geschoben ist.

7. Bootsfischpass nach Patentanspruch 1, **dadurch gekennzeichnet,**
**dass** mehrere Kammern (4) einen Abschnitt des Bootsfischpasses bilden, der auf einem LKW transportiert werden kann.

8. Bootsfischpass nach Patentanspruch 7, **dadurch gekennzeichnet,**
**dass** die Abschnitte des Bootsfischpasses als ein U-förmiger Trog (1) mit senkrecht stehenden Kammerwänden (2) aus glasfaserverstärkten Kunststoffbohlen (36) gefertigt sind.

9. Bootsfischpass nach Patentanspruch 7, **dadurch gekennzeichnet,**
**dass** die Abschnitte des Bootsfischpasses aneinandergereiht auf einer örtlich hergestellten Betonsohlrampe (39) befestigt sind, wobei aneinander angrenzende Abschnitte zusammenhängend miteinander verbunden sind.

10. Bootsfischpass nach Patentanspruch 1, **dadurch gekennzeichnet,**
**dass** die Querwände (5) unter einem Winkel (20) von 60° gegen den Wasserdurchfluss (33, 34) an den Kammerwänden (2) befestigt sind.

11. Bootsfischpass nach Patentanspruch 10, **dadurch gekennzeichnet,**
**dass** der Winkel (20) der Querwand (5) mit einem runden Strömungsfänger (6) gefüllt ist.

12. Bootsfischpass nach Patentanspruch 11, **dadurch gekennzeichnet,**
**dass** die Querwände (5) aus glasfaserverstärkten Kunststoffprofilen gefertigt sind und die Strömungsfänger (6) aus Beton (35) hergestellt sind.

13. Bootsfischpass nach Patentanspruch 1, **dadurch gekennzeichnet,**
**dass** am Ende der Querwand (5) zur Schlitzpforte (7) hin sich ein Strömungskeil (8) und eine Strömungsstange (9) befinden.

14. Bootsfischpass nach Patentanspruch 13, **dadurch gekennzeichnet,**
**dass** der Querschnitt der Schlitzpforte (7) durch eine Einstellung des Strömungskeils (8) veränderlich ist.

15. Bootsfischpass nach Patentanspruch 1, **dadurch gekennzeichnet,**
**dass** die Oberkanten der Querwände (5) und die Oberkanten der Kammerwände (2) durch Rundprofile (37) aus Kunststoff gebildet sind.

16. Bootsfischpass nach Patentanspruch 1, **dadurch gekennzeichnet,**
**dass** an den Oberkanten der Querwände (5) ein parallel zu dem hydraulischen Korridor verlaufender Handlauf (14) angebracht ist.

17. Bootsfischpass nach Patentanspruch 16, **dadurch gekennzeichnet,**
**dass** zwischen dem Handlauf (14) und der Kammerwand (2) über die Länge des Bootsfischpasses ein Treidelsteg (38) angebracht ist

18. Bootsfischpass nach Patentanspruch 1, **dadurch gekennzeichnet,**
**dass** der Bodenaufbau der Trogsohle (3) als ein Benthos-Korridor gebildet ist, bestehend aus einer Kiesschüttung (16), die durch ein PE-Wirrgelege (17) fixiert ist.

19. Bootsfischpass nach Patentanspruch 18, **dadurch gekennzeichnet,**
**dass** der Benthos-Korridor durch Rohr-Halbschalen (18) gehalten ist, die mit der Trogsohle (3) verschraubt sind.

20. Bootsfischpass nach Patentanspruch 19, **dadurch gekennzeichnet,**
**dass** die Rohr-Halbschalen (18) halbkreisförmig mit einem Abstand quer vor dem Strömungsfänger (6) angeordnet sind.
